# EUROPÄISCHE PATENTSCHRIFT

(11) **EP 4 108 556 B1**
(45) Veröffentlichungstag und Bekanntmachung des Hinweises auf die Patenterteilung: **08.10.2025**
(21) Anmeldenummer: 22177309.6
(22) Anmeldetag: 03.06.2022
(51) Int. Cl.: B62D 33/06, B62D 33/063, B60N 2/14, B62D 49/06, A01B 73/04, A01B 73/00

(54) **FAHRZEUG UND ENTSPRECHENDE VERWENDUNG**
VEHICLE AND CORRESPONDING USE
VÉHICULE ET UTILISATION CORRESPONDANTE

(30) Priorität: 23.06.2021 DE 102021116227
(43) Veröffentlichungstag der Anmeldung: 28.12.2022
(73) Patentinhaber: Exel Industries, 51200 Epernay (FR)
(72) Erfinder: FORSTER, Erhard, 84069 SCHIERLING/UNTERDEGGENBACH (DE); POTUSCHNIK, Michael, 84085 LANGQUAID (DE); FUCHS, Bernhard, 93047 REGENSBURG (DE); GALLMEIER, Michael, 84061 ERGOLDSBACH (DE)
(74) Vertreter: Lavoix

(56) Entgegenhaltungen:
- EP-A1- 2 628 375
- WO-A1-96/15656
- DE-T2- 602006 000 948
- DE-U1- 29 715 066
- US-A- 3 825 087
- US-A1- 2005 274 531
- US-A1- 2015 102 569

## Beschreibung

Die vorliegende Erfindung betrifft ein Fahrzeug gemäß dem Oberbegriff des Anspruchs 1.

Es sind landwirtschaftliche Fahrzeuge bekannt, die eine Vielzahl von Einsatzzwecken aufweisen und zu diesem Zweck verschieden Anbaugeräte tragen können.

Ein solches Fahrzeug ist z.B. der Prototyp des "Multi Tool Trac" (https://www.farm-connexion.com/2018/05/02/un-multi-tool-trac-plus-compact-des-2019/). Dieses Fahrzeug weist einen Fahrzeugrahmen, eine Fahrerkabine, und zwei Vorder- und zwei Hinterräder auf.

Das Fahrzeug weist weiterhin eine am Fahrzeugrahmen angebrachte Anbaugeräteaufnahme auf, die zwischen den Vorder- und den Hinterrädern angebracht ist.

Die Fahrerkabine ist im Bereich der Hinterräder angebracht. Eine Motorhaube ist im vorderen Bereich des Fahrzeugrahmens angebracht.

Ein Prototyp eines "Multi Tool Trac" Fahrzeugs hat eine variable Spurbreite und eine Fahrerkabine, die im Bereich der Mitte des Fahrzeugrahmens angebracht ist - (https://www.youtube.com/watch?v=jVn9dvtqdFA)

Ein weiteres Fahrzeug ist aus US2005/0274531 bekannt. Dieses Fahrzeug weist einen Fahrzeugrahmen auf, an dem Anbaugeräte in der Form von Reihenvorbereitungsvorrichtungen und Drillvorrichtungen zwischen den Vorder- und Hinterrädern angebracht sind.

Weitere Mehrzweckfahrzeuge sind bekannt, z.B. die MB-trac Fahrzeuge. DE602006000948T2 offenbart ein landwirtschaftliches Fahrzeug gemäß dem Oberbegriff des Anspruchs 1.

Die bekannten Fahrzeuge erlauben es jedoch nicht oder nur unter erheblichen technischen und wirtschaftlichen Kompromissen, Anbaugeräte aufzunehmen die im Feldbetrieb große Arbeitsbreiten aufweisen und dennoch wirtschaftlich im Straßenbetrieb eingesetzt zu werden.

Insbesondere erlauben es die bekannten Fahrzeuge nicht oder nur unter erheblichen technischen und wirtschaftlichen Kompromissen, im Feldbetrieb große Arbeitsbreiten aufzuweisen und ohne Begleitfahrzeug im Straßenbetrieb verwendet zu werden.

Die vorliegende Erfindung hat zum Ziel ein Fahrzeug aufzuzeigen, mit dem landwirtschaftliche Arbeiten wirtschaftlich durchgeführt werden können.

Die vorliegende Erfindung hat insbesondere die Aufgabe, den Nachteilen des Standes der Technik abzuhelfen. Eine weitere Aufgabe ist eine einfache Konstruktionsweise der Vorrichtung.

Zu diesem Zweck schlägt die Erfindung ein Fahrzeug vor, das die Merkmale des Anspruches 1 aufweist.

Vorteilhafte Ausgestaltungen sind in den Unteransprüchen sowie in der Beschreibung angegeben.

Die Erfindung hat ebenfalls eine Verwendung gemäß Anspruch 9 zum Gegenstand.

Die Erfindung wird anhand der folgenden Beschreibung eines Ausführungsbeispiels erläutert, das Bezug auf die anliegenden Zeichnungen nimmt.

Die einzelnen Merkmale der Ansprüche und der Beschreibung sind in jeder beliebigen Kombination oder Unterkombination als offenbart zu sehen, soweit sie technisch nicht inkompatibel sind.
Figur 1 zeigt ein erfindungsgemäßes Fahrzeug in einer rückwärtigen Ansicht, wobei das Fahrzeug in einer Feldarbeitskonfiguration ist;
Figur 2 zeigt das Fahrzeug von Figur 1 in einer Seitenansicht;
Figur 3 zeigt das Fahrzeug von Figur 1 in einer Aufsicht;
Figur 4 zeigt das Fahrzeug in einer der Figur 1 entsprechenden Ansicht, wobei das Fahrzeug in einer Feldfahrkonfiguration ist;
Figur 5 zeigt das Fahrzeug in einer der Figur 2 entsprechenden Ansicht, wobei das Fahrzeug in der Feldfahrkonfiguration ist;
Figur 6 zeigt das Fahrzeug in einer der Figur 3 entsprechenden Ansicht, wobei das Fahrzeug in der Feldfahrkonfiguration ist;
Figur 7 zeigt das Fahrzeug in einer der Figuren 1 und 4 entsprechenden Ansicht, wobei das Fahrzeug in einer Straßenkonfiguration ist;
Figur 8 zeigt das Fahrzeug in einer der Figuren 2 und 5 entsprechenden Ansicht, wobei das Fahrzeug in der Straßenkonfiguration ist; und
Figur 9 zeigt das Fahrzeug in einer der Figuren 3 und 6 entsprechenden Ansicht, wobei das Fahrzeug in der Straßenkonfiguration ist.

In der vorliegenden Beschreibung der Erfindung werden Eignungsangaben, wie "dazu ausgebildet" oder "dazu geeignet", dahingehend verwendet, dass die zugehörige Aktion mitoffenbart ist. Zum Beispiel umfasst der Ausdruck "dazu ausgebildet zu roden" auch die Offenbarung "roden".

Die Begriffe "oben", "unten", usw. werden mit Bezug auf die normale Gebrauchsposition des Fahrzeugs verwendet.

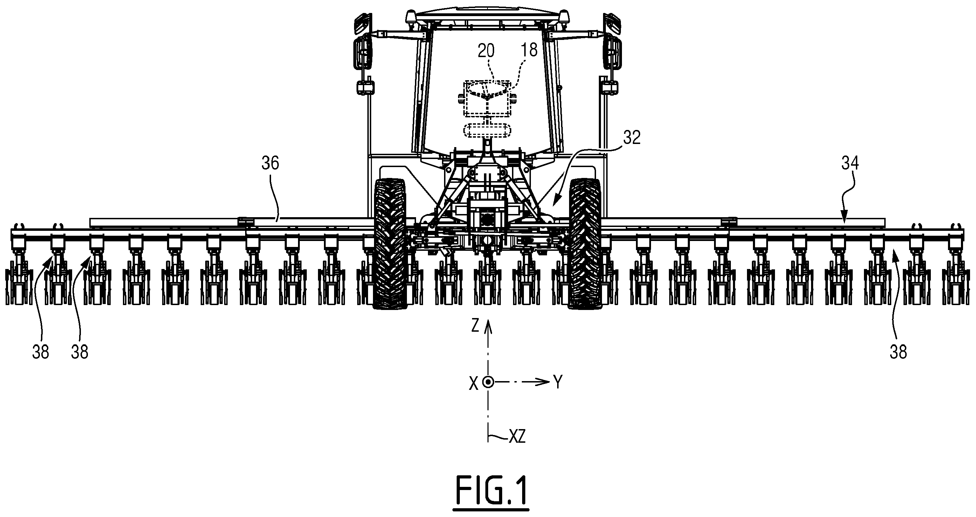

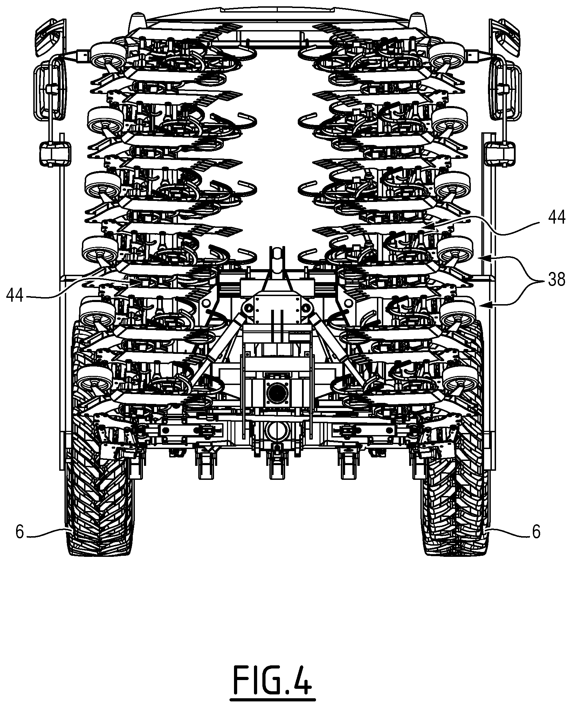

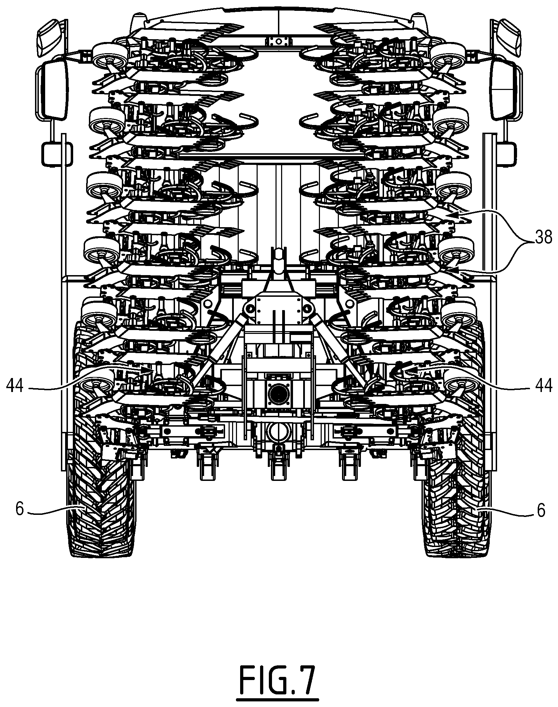

Die Figuren 1 bis 9 zeigen ein erfindungsgemäßes Fahrzeug 2, das zum Beispiel ein landwirtschaftliches Nutzfahrzeug ist.

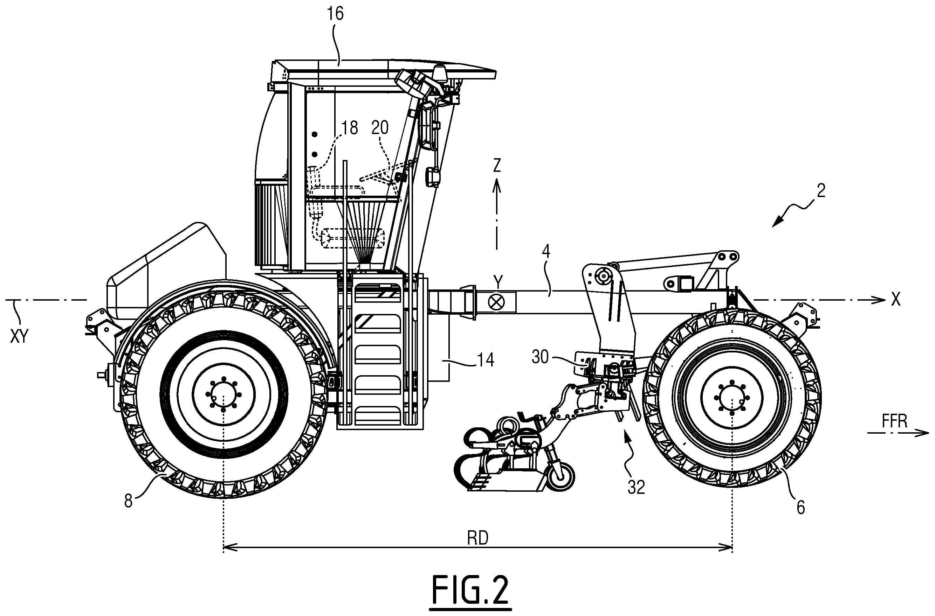

Das Fahrzeug 2 definiert eine Fahrzeuglängsachse X, eine Fahrzeugquerachse Y und eine Fahrzeughochachse Z. Das Fahrzeug 2 definiert eine Fahrzeuglängsebene XZ, die durch die Fahrzeuglängsachse X und die Fahrzeughochachse Z aufgespannt wird. Das Fahrzeug 2 definiert weiterhin eine Rahmenebene XY, die im Wesentlichen eine Mittelebene des Fahrzeugrahmens (siehe nachstehend sowie Figur 2) bildet.

Das Fahrzeug 2 definiert eine Feldfahrkonfiguration und eine Straßenfahrkonfiguration, deren Struktur untenstehend näher erläutert werden. In der Feldfahrkonfiguration ist das Fahrzeug dafür ausgelegt auf einem zu bearbeitetem Feld bewegt zu werden und eine uneingeschränkte Sicht des Fahrers auf die aktiven Arbeitsgeräte des Fahrzeugs zu ermöglichen. In der Straßenfahrkonfiguration ist das Fahrzeug dafür ausgelegt auf einer Straße bewegt zu werden auf der Vorschriften des Straßenverkehrs Anwendung finden (z.B. StVO, StVZO) und auf der insbesondere die Dimensionen eines Fahrzeugs ohne Begleitfahrzeug eingeschränkt sind.

Das Fahrzeug 2 umfasst einen Fahrzeugrahmen 4, zwei erste Fahrzeugräder 6, zwei zweite Fahrzeugräder 8.

Der Fahrzeugrahmen 4 ist vorteilhafterweise ein Zentralrohrrahmen. Im dargestellten Ausführungsbeispiel ist der Fahrzeugrahmen starr. Alternativ weist der Fahrzeugrahmen ein betätigbares Knickgelenk auf (nicht dargestellt), das den Fahrzeugrahmen in zwei Rahmenabschnitte zueinander bewegliche Abschnitte teilt. Die ersten Fahrzeugräder sind hierbei auf einem ersten Rahmenabschnitt angeordnet und die zweiten Fahrzeugräder sind auf einem zweiten Rahmenabschnitt angeordnet. Das Fahrzeug kann also mit einer Knicklenkung ausgestattet sein.

In der Feldfahrkonfiguration liegen die ersten Fahrzeugräder 6 in Fahrtrichtung (Feldfahrtrichtung FFR) vorne und in der Straßenfahrkonfiguration in Fahrtrichtung (Straßenfahrtrichtung SFR) hinten. Umgekehrt liegen die zweiten Fahrzeugräder 8 in der Feldfahrkonfiguration in Fahrtrichtung hinten und in der Straßenfahrkonfiguration in Fahrtrichtung vorne.

Alle vier Fahrzeugräder 6, 8 sind lenkbar. Die Fahrzeugräder können jeweils als Einfachreifen oder als Doppeltbereifung ausgeführt sein. Die ersten und die zweiten Fahrzeugräder 6, 8 können den gleichen Raddurchmesser aufweisen. Alternativ ist der Raddurchmesser der ersten Fahrzeugräder 6 kleiner als der Raddurchmesser der zweiten Fahrzeugräder 8, was eine gute Sicht nach vorne erlaubt.

Die ersten Fahrzeugräder und die zweiten Fahrzeugräder definieren zwischen sich einen Radstand RD, der dem Abstand der jeweiligen Drehachsen der Räder entspricht.

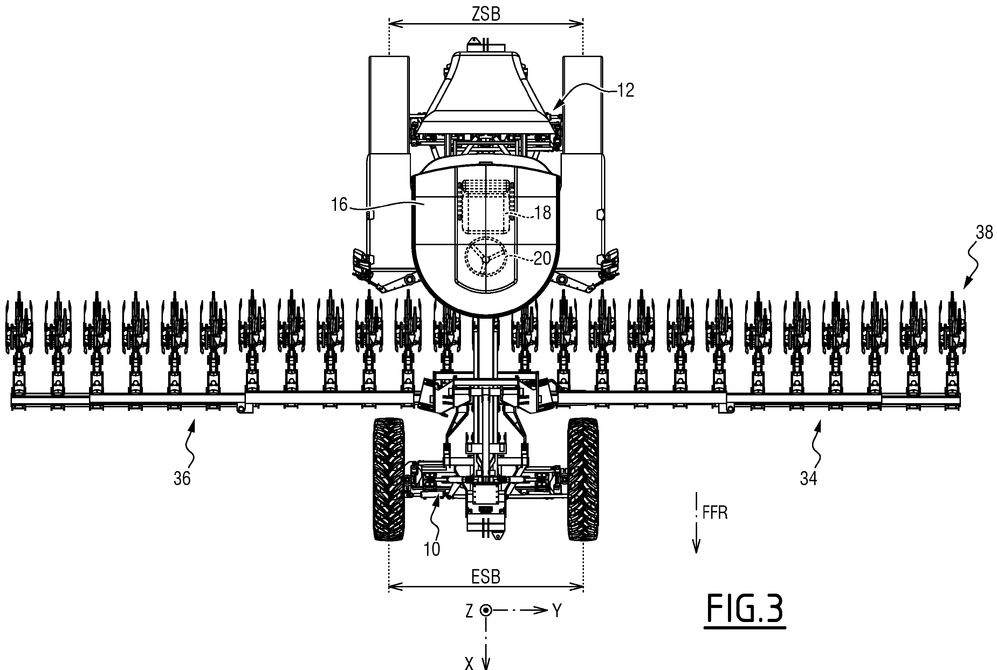

Die ersten Fahrzeugräder 6 definieren eine erste Spurbreite ESB (Figur 3) und die zweiten Fahrzeugräder 8 definieren eine zweite Spurbreite ZSB. Die erste Spurbreite ESB und die zweite Spurbreite ZSB können identisch oder verschieden sein. Das Fahrzeug 2 weist vorteilhafterweise eine erste, möglicherweise hydraulische, Spurbreitenverstelleinrichtung 10 auf, mittels welcher die erste Spurbreite ESB verstellbar ist. Das Fahrzeug 2 eine zweite, möglicherweise hydraulische, Spurbreitenverstelleinrichtung 12 auf, mittels welcher die zweite Spurbreite ZSB verstellbar ist.

Die erste Spurbreite ESB und die zweite Spurbreite ZSB können so eingestellt sein, dass sie entweder im Wesentlichen gleich sind, z.B. bei Straßenfahrt, oder im Wesentlichen unterschiedlich sind, z.B. bei Feldfahrt. Die erste Spurbreite und die zweite Spurbreite können in einer Bodenschonkonfiguration so unterschiedlich sein, dass die ersten Fahrzeugräder 6 und die zweiten Fahrzeugräder 8 jeweils Fahrspuren definieren, die sich einander nicht, bzw. nicht Wesentlich, überdecken. In dieser Konfiguration wird, zumindest bei Geradeausfahrt des Fahrzeugs 2, jeder Bodenpunkt, der von einem der ersten oder zweiten Fahrzeugräder überrollt wird, von keinem anderen der ersten oder zweiten Fahrzeugräder überrollt. Hierdurch wird der Druck auf den Boden gering gehalten.

Das Fahrzeug 2 umfasst weiterhin einen Antriebsmotor 14, dazu ausgelegt, mindestens zwei der Fahrzeugräder anzutreiben, sowie eine Fahrerkabine 16 in der ein Fahrersitz 18 und ein Lenkmittel 20, z.B. ein Lenkrad, angeordnet ist. Mit dem Lenkmittel sind die lenkbaren ersten und/oder zweiten Fahrzeugräder 6, 8 lenkbar. Alternativ umfasst das Lenkmittel 20 kein Lenkrad, sondern z.B. einen Joystick oder andere Eingabegeräte. Dies verbessert gegebenenfalls nochmals die Sicht auf die Arbeitswerkzeuge. Weiter alternativ umfasst das Lenkmittel ein Lenkrad und einen Joystick oder andere Eingabegeräte.

Der Antriebsmotor 14 ist vorteilshafterweise als Unterflurantrieb ausgebildet ist und ist unter dem Fahrzeugrahmen 4 angeordnet. Weiter vorteilhafterweise fluchtet der Antriebsmotor 14 in Fahrzeuglängsachsenrichtung mit der Fahrerkabine 16 oder überdeckt sich mit der Fahrerkabine. Der Antriebsmotor weist eine Motorwelle auf, die vorteilhafterweise parallel zur Fahrzeugquerachse Y verläuft oder alternativ parallel zur Fahrzeuglängsachse X angeordnet ist.

Die Fahrerkabine 16 mit dem Fahrersitz 18 und dem Lenkmittel 20 ist bezüglich des Fahrzeugrahmens 4 beweglich angeordnet und zwar im Ausführungsbeispiel drehbar um die Fahrzeughochachse Z, bzw. eine zu dieser Achse Z parallele Achse. Die Fahrerkabine 16 ist dabei um mindestens 180° beweglich. Der Fahrersitz und die Lenkmittel 20 sind dabei mit der Fahrerkabine 16 so verbunden, dass bei einer Bewegung der Fahrerkabine der Fahrersitz 18 und das Lenkmittel 20 mitbewegt wird.

Alternativ ist der Fahrersitz 18 bezüglich des Fahrzeugrahmens 4 um die Fahrzeughochachse Z oder um eine zu dieser Achse parallele Achse beweglich angeordnet, z.B. drehbar oder verschwenkbar, während die Fahrerkabine 16 bezüglich des Fahrzeugrahmens 4 unbeweglich ist.

Weiter alternativ ist das Lenkmittel 20 entweder mit dem Fahrersitz 18, bzw. mit der Fahrerkabine 16, beweglich oder bezüglich des Fahrzeugrahmens 4 unbeweglich. In letzterem Falle weist das Fahrzeug ggf. weitere Lenkmittel wie z.B. ein weiteres Lenkrad auf, wobei die Lenkmittel 20 und die weiteren Lenkmittel jeweils in nur einer der Feldfahrkonfiguration bzw. Straßenfahrkonfiguration vom Fahrersitz aus bedient werden können bzw. aktiv sind.

Vorzugsweise ist die Fahrerkabine 16 mit dem Fahrersitz 18 und/oder mit dem Lenkmittel um mindestens 180° um die Fahrzeughochachse Z, oder eine zur Fahrzeughochachse parallele Achse, beweglich, nämlich drehbar oder schwenkbar.

Der Ausdruck "beweglich" bzw. "unbeweglich" bezieht sich im Zusammenhang mit der Fahrerkabine 16, dem Fahrersitz 18 und den Lenkmitteln 20 ausschließlich auf die o.g. Bewegung um mindestens 180°. Andere Beweglichkeiten bzw. Unbeweglichkeiten z.B. zur ergonomischen Anpassung der Lenkmittel 20 und des Fahrersitzes 18 zueinander bleiben hiervon unberührt.

Damit weist das Fahrzeug 2 eine Feldfahrkonfiguration auf, in der eine durch den Fahrersitz 18 definierte Sitzposition den ersten Fahrzeugrädern 6 zugewandt ist. In dieser Feldfahrkonfiguration ist das Lenkmittel 20 in Fahrzeuglängsrichtung zwischen Fahrersitz 18 und den ersten Fahrzeugrädern 6 angeordnet. Das Fahrzeug weist ebenfalls eine Straßenfahrkonfiguration auf, in der die durch den Fahrersitz definierte Sitzposition den zweiten Fahrzeugrädern 8 zugewandt ist, bzw. den ersten Fahrzeugrädern abgewandt ist. In dieser Straßenfahrkonfiguration ist das Lenkmittel 20 in Fahrzeuglängsrichtung zwischen Fahrersitz 18 und den zweiten Fahrzeugrädern 8 angeordnet. Alternativ ist das Lenkmittel 20 in der Straßenfahrkonfiguration im Wesentlichen über den zweiten Fahrzeugrädern 8 oder auf der den ersten Fahrzeugrädern 6 abgewandten Seite der zweiten Fahrzeugräder angeordnet.

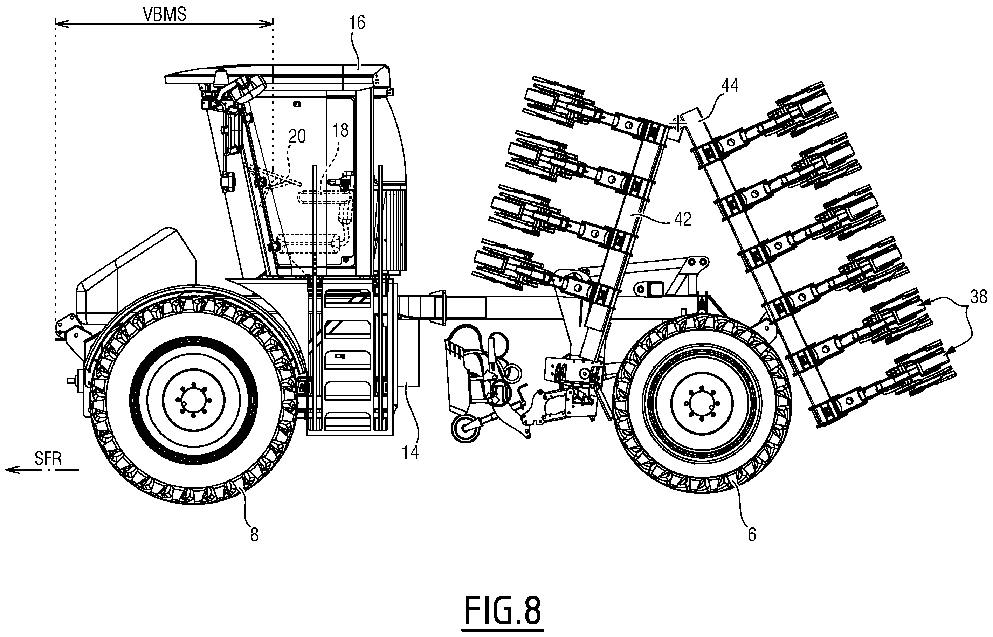

In der Straßenkonfiguration weist das Fahrzeug vorteilhafterweise ein Vorbaumaß VBMS, d.h. eine Fahrzeuglänge in Fahrzeuglängsrichtung vor dem Lenkmittel in Straßenfahrtrichtung SFR, von weniger als 3,50m auf (siehe Figur 8). Vorzugsweise ist das Vorbaumaß VBMS geringer als 3,00m. Vorzugsweise ist das Vorbaumaß VBMS mindestens 1,00 m.

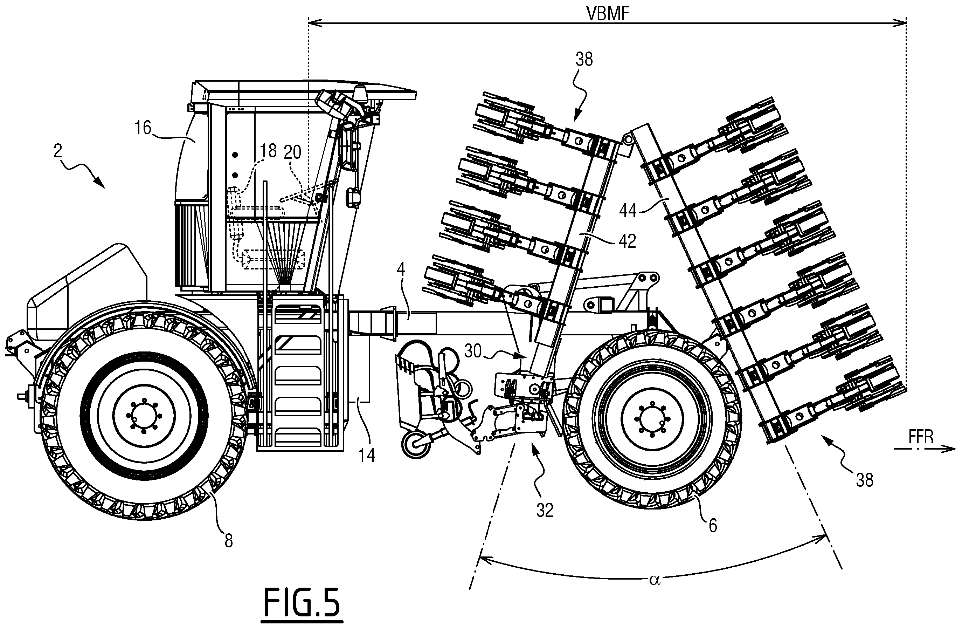

Im Gegensatz dazu ist das entsprechende Vorbaumaß VBMF in der Feldfahrkonfiguration, während sich die Ausleger 34, 36 in der Transportkonfiguration befinden (siehe unten und Figur 5), grösser als 3,50m.

Das Fahrzeug 2 weist weiter eine Geräteaufnahme 30 auf, die in Fahrzeuglängsrichtung (X-Achse) zwischen den ersten Fahrzeugrädern 6 und den zweiten Fahrzeugrädern 8 angeordnet ist. In der Feldfahrkonfiguration ist die durch den Fahrersitz definierte Sitzposition zusätzlich der Geräteaufnahme 30 zugewandt.

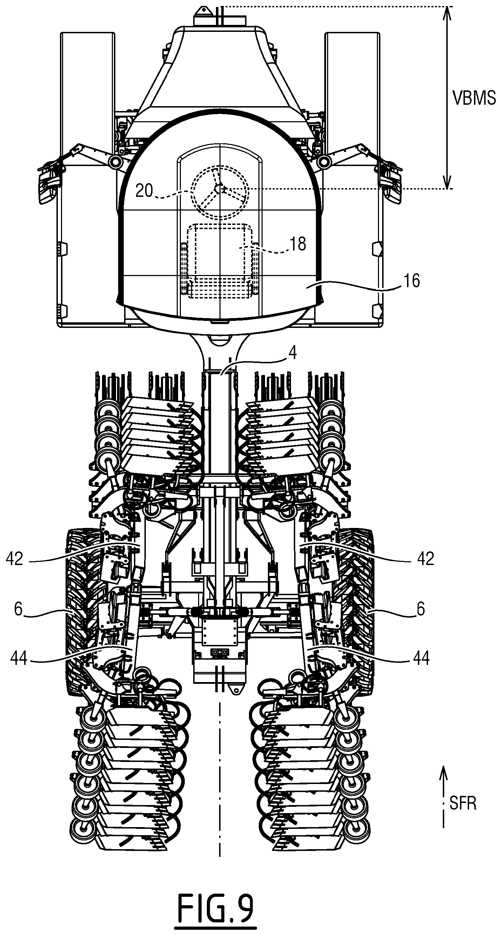

Das Fahrzeug 2 weist ebenfalls einen Arbeitsgeräteträger 32 auf welcher zwei Ausleger 34, 36 besitzt. Je einer der beiden Ausleger 34, 36 ist auf einer der zwei Seiten der Fahrzeuglängsebene XZ angeordnet. Der Arbeitsgeräteträger 32 ist an der Geräteaufnahme 30 angebracht. Die zwei Ausleger 34, 36 sind zwischen einer Arbeitskonfiguration und einer Transportkonfiguration beweglich. In der Arbeitskonfiguration erstrecken sich die zwei Ausleger 34, 36 quer zur Fahrzeuglängsachse X oder quer zur Fahrzeuglängsebene XZ. Die Ausleger können sich in der Arbeitskonfiguration im Wesentlichen parallel zur Fahrzeugquerachse Y erstrecken (Figur 1) oder einen Winkel von bis zu 10° oder 15° mit der Fahrzeugquerachse Y einschließen. In der Transportkonfiguration erstrecken sich die zwei Ausleger im Wesentlichen parallel zur Fahrzeuglängsebene XZ (z.B. Figur 9) oder einen Winkel von bis zu 10° oder 15° mit der Fahrzeuglängsebene XZ einschließen.

Die Ausdrücke "im Wesentlichen parallel", umfassen z.B. einen Winkel zwischen einschließlich 0° und 5° zwischen der jeweiligen Ebene oder Achse.

Die Arbeitskonfiguration wird mindestens in der Feldfahrkonfiguration eingenommen, und die Transportkonfiguration wird mindestens in der Straßenfahrkonfiguration eingenommen.

Das Fahrzeug kann ebenfalls eine Mischkonfiguration einnehmen, in der die zwei Ausleger 34, 36 in der Arbeitskonfiguration sind und in der gleichzeitig der Fahrersitz 18, sowie evtl das Lenkmittel 20 und/oder die Fahrerkabine 16, in der Position der Straßenkonfiguration ist. Diese Mischkonfiguration kann z.B. zum Bearbeiten von Feldern verwendet werden, falls eine gute Sicht auf die Arbeitsgeräte weniger wichtig ist als eine gute Sicht auf den Boden vor dem Fahrzeug.

Jeder der Ausleger 34, 36 ist mindestens 2m lang, vorteilhafterweise mindestens 3m lang.

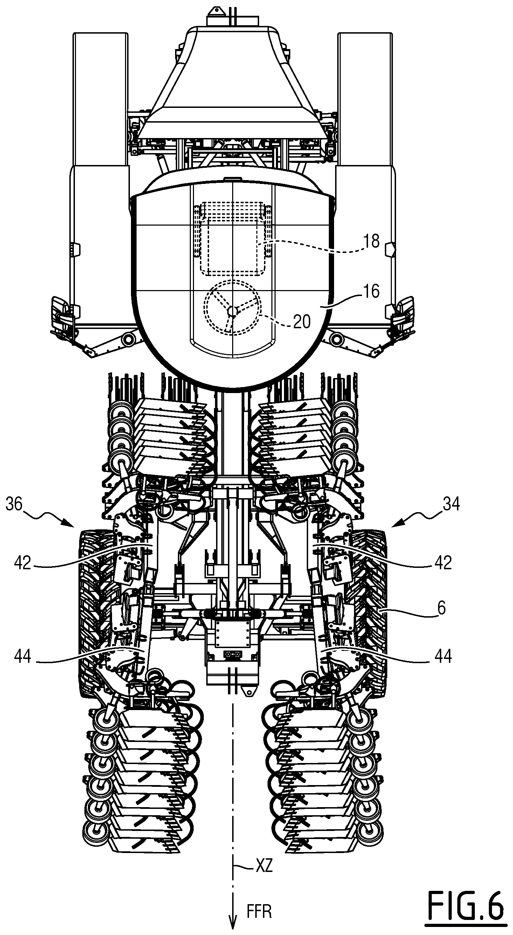

In der Transportkonfiguration sich erstreckt jeder der Ausleger 34, 36 in Fahrzeuglängsrichtung über die ersten Fahrzeugräder 6 (siehe Figur 5 und Figur 6).

Der Arbeitsgeräteträger 32, genauer jeder Ausleger 34, 36 trägt eine Mehrzahl an Arbeitsgeräten, wie z.B. Hackagreggate 38 zur Bodenbearbeitung. Die Arbeitsgeräte sind also an den Auslegern angebracht.

Jeder der beiden Ausleger 34, 36 weist einen ersten Auslegerteil 42 und einen zweiten Auslegerteil 44 aufweist, die miteinander gelenkig verbunden sind, wobei der erste Auslegerteil 42 zwischen dem Fahrzeugrahmen und dem zweitem Auslegerteil 44 angebracht ist. In der Arbeitskonfiguration fluchten der erste Auslegerteil und der zweite Auslegerteil. In der Transportkonfiguration sind der erste und der zweite Auslegerteil gegeneinander abgewinkelt und bilden einen Winkel kleiner 180°, der nach unten offen ist. Dieser Winkel ist vorzugsweise kleiner 120°, kleiner 100° oder kleiner 90°.

Der erste Auslegerteil 42 ist im Ausführungsbeispiel kürzer als der zweite Auslegerteil 44, und hat z.B. eine Länge von 60% bis 80% des zweiten Auslegerteils.

In der Transportkonfiguration erstreckt sich der erste Auslegerteil in Fahrzeuglängsrichtung (X-Achse) zwischen den ersten und den zweiten Fahrzeugrädern, bzw. ausschließlich zwischen den Radachsen der ersten und der zweiten Fahrzeugräder.

In der Transportkonfiguration erstreckt sich der zweite Auslegerteil 44 in Fahrzeuglängsrichtung auf der Seite der ersten Fahrzeugräder 6 erstreckt, die den zweiten Fahrzeugrädern 8 abgewandt ist.

Weiterbildungen des erfindungsgemäßen Fahrzeugs können noch die folgenden Merkmale aufweisen:
Das Fahrzeug weist an Heck und/oder Front des Fahrzeugrahmens angebrachte Anbauelemente auf, wie z.B. hydraulisch betätigbare Dreipunkt-Kraftheber.

Das Fahrzeug weist über dem Fahrzeugrahmen und über den Arbeitsgeräteträger ein Aufbauelement auf, das an den Fahrzeugrahmen befestigt ist. Das Aufbauelement kann z.B. ein weiterer Geräteträger oder einen Behälter umfassen.

Diese Merkmale erlauben es Verfahrensschritte zu kombinieren und erhöhen weiter die Flexibilität und Effizienz des Fahrzeugs.

In der Straßenkonfiguration erlaubt das Fahrzeug ein Fahren auf Straßen, da die Sicht in Fahrtrichtung vorne durch die Ausleger nicht eingeschränkt wird. Ein Begleitfahrzeug ist hierbei also nicht notwendig. Weiterhin führt das Fahrzeug zu einer vergleichsweise geringen und ausgewogenen Radlast für eine gegebene Arbeitsgeometrie.

In der Feldfahrkonfiguration erlaubt das Fahrzeug eine wirtschaftliche Bodenbearbeitung, da die Arbeitsbreite relativ groß ist und der Fahrer/die Fahrerin einen uneingeschränkten Blick auf die Arbeitsgeräte hat.

## Patentansprüche

1. - Fahrzeug, umfassend
- einen Fahrzeugrahmen (4),
- zwei erste Fahrzeugräder (6),
- zwei zweite Fahrzeugräder (8),
- einen Antriebsmotor (14), dazu ausgelegt, mindestens zwei der Fahrzeugräder anzutreiben und
- eine Fahrerkabine (16) in der ein Fahrersitz (18) und ein Lenkmittel (20) (Lenkrad) angeordnet ist,
wobei das Fahrzeug eine Fahrzeuglängsachse (X), eine Fahrzeugquerachse (Y) und eine Fahrzeughochachse (Z) definiert, und wobei die ersten Fahrzeugräder und die zweiten Fahrzeugräder einen Radstand RD definieren,
wobei
zumindest der Fahrersitz um mindestens 180° um die Fahrzeughochachse (Z), oder eine zur Fahrzeughochachse parallele Achse, beweglich ist, wobei das Fahrzeug eine Feldfahrkonfiguration definiert, in der eine durch den Fahrersitz definierte Sitzposition den ersten Fahrzeugrädern zugewandt ist und eine Straßenfahrkonfiguration definiert, in der die durch den Fahrersitz definierte Sitzposition den zweiten Fahrzeugrädern zugewandt ist, wobei
das Fahrzeug eine Geräteaufnahme (30) aufweist und die Geräteaufnahme in Fahrzeuglängsrichtung zwischen den ersten Fahrzeugrädern (6) und den zweiten Fahrzeugrädern (8) angeordnet ist, wobei in der Feldfahrkonfiguration die durch den Fahrersitz definierte Sitzposition zusätzlich der Geräteaufnahme zugewandt ist,
**dadurch gekennzeichnet, dass** alle vier Fahrzeugräder lenkbar sind.

2. Fahrzeug nach Anspruch 1, wobei
die ersten Fahrzeugräder eine erste Spurbreite definieren und das Fahrzeug eine erste Spurbreitenverstelleinrichtung (10) aufweist mittels welcher die erste Spurbreite verstellbar ist;
die zweiten Fahrzeugräder eine zweite Spurbreite definieren und das Fahrzeug eine zweite Spurbreitenverstelleinrichtung (12) aufweist mittels welcher die zweite Spurbreite verstellbar ist.

3. Fahrzeug nach Anspruch 1 oder 2, wobei das Fahrzeug
eine Fahrzeuglängsebene (XZ) definiert, die durch die Fahrzeuglängsachse und die Fahrzeughochachse aufgespannt wird, wobei das Fahrzeug
einen Arbeitsgeräteträger (32) aufweist welcher zwei Ausleger (34, 36) besitzt, wobei
der Arbeitsgeräteträger an der Geräteaufnahme (30) angebracht ist, und die zwei Ausleger zwischen einer Arbeitskonfiguration, in der sich die zwei Ausleger quer zur Fahrzeuglängsachse erstrecken und einer Transportkonfiguration, in der sich die zwei Ausleger parallel zur der Fahrzeuglängsebene erstrecken verstellbar sind.

4. Fahrzeug nach Anspruch 3, wobei
jeder der beiden Ausleger einen ersten Auslegerteil (42) und einen zweiten Auslegerteil (44) aufweist, die miteinander gelenkig verbunden sind.

5. Fahrzeug nach Anspruch 4, wobei
in der Transportkonfiguration der erste Auslegerteil (42) sich in Fahrzeuglängsrichtung zwischen den ersten und den zweiten Fahrzeugrädern erstreckt und der zweite Auslegerteil sich in Fahrzeuglängsrichtung auf der Seite der ersten Fahrzeugräder erstreckt, die den zweiten Fahrzeugrädern abgewandt ist.

6. Fahrzeug nach Anspruch 4 oder 5, wobei in der Transportkonfiguration der erste Auslegerteil (42) und der zweite Auslegerteil (44) gegeneinander abgewinkelt sind und einen spitzen Winkel bilden.

7. Fahrzeug nach einem der Ansprüche 4 bis 6, wobei
der Arbeitsgeräteträger Arbeitsgeräte (38) aufweist, die an den Auslegern angebracht sind.

8. Fahrzeug nach einem der Ansprüche 1 bis 7, wobei der Antriebsmotor als Unterflurantrieb ausgebildet ist und unter dem Fahrzeugrahmen (4) angeordnet ist,

9. Verwendung eines Fahrzeugs nach einem der vorhergehenden Ansprüche, umfassend die Schritte:
- Bearbeitung eines Feldes während sich das Fahrzeug in der Feldfahrkonfiguration befindet, und
- Fahren des Fahrzeugs auf einer Straße, während sich das Fahrzeug in der Straßenfahrkonfiguration befindet.

## Claims

1. - Vehicle, comprising
- a vehicle frame (4),
- two first vehicle wheels (6),
- two second vehicle wheels (8),
- a drive motor (14) designed to drive at least two of the vehicle wheels, and
- a driver's cab (16) in which a driver's seat (18) and a steering means (20) (steering wheel) are arranged,
wherein the vehicle defines a vehicle longitudinal axis (X), a vehicle transverse axis (Y) and a vehicle vertical axis (Z), and wherein the first vehicle wheels and the second vehicle wheels define a wheelbase RD,
wherein:
at least the driver's seat is rotatable by at least 180° about the vehicle vertical axis (Z), or an axis parallel thereto, the vehicle thereby defining a field operating configuration in which the seat position defined by the driver's seat faces the first vehicle wheels, and a road driving configuration in which the seat position defined by the driver's seat faces the second vehicle wheels, wherein
the vehicle comprises an implement holder (30), and the implement holder is arranged in the longitudinal direction of the vehicle between the first vehicle wheels (6) and the second vehicle wheels (8), wherein, in the field operating configuration, the seat position defined by the driver's seat additionally faces the implement mount,
**characterized in that**
all four vehicle wheels are steerable.

2. Vehicle according to claim 1, wherein
the first vehicle wheels define a first track width and the vehicle has a first track width adjustment device (10) by means of which the first track width can be adjusted;
the second vehicle wheels define a second track width and the vehicle has a second track width adjustment device (12) by means of which the second track width can be adjusted.

3. Vehicle according to claim 1 or 2, wherein the vehicle
defines a vehicle longitudinal plane (XZ), which is spanned by the vehicle longitudinal axis and the vehicle vertical axis, whereby the vehicle
has an implement carrier (32) which has two arms (34, 36), wherein
the implement carrier is attached to the implement holder (30), and the two arms are adjustable between a working configuration, in which the two arms extend transversely to the longitudinal axis of the vehicle, and a transport configuration, in which the two arms extend parallel to the longitudinal plane of the vehicle.

4. Vehicle according to claim 3, wherein
each of the two arms has a first arm section (42) and a second arm section (44), which are hinged to each other.

5. Vehicle according to claim 4, wherein
In the transport configuration, the first arm section (42) extends in the longitudinal direction of the vehicle between the first and the second vehicle wheels, and the second arm section extends in the longitudinal direction on the side of the first vehicle wheels that faces away from the second vehicle wheels.

6. Vehicle according to claim 4 or 5, wherein in the transport configuration of the first arm section (42) and the second arm section (44) are angled towards each other and form an acute angle.

7. A vehicle according to any one of claims 4 to 6, wherein
the implement carrier comprises work implements (38) which are mounted on the arms.

8. Vehicle according to any one of claims 1 to 7, wherein the drive motor is designed as an underfloor drive and is arranged beneath the vehicle frame (4).

9. Use of a vehicle according to any one of the preceding claims, comprising the following steps:
- Working a field while the vehicle is in the field operating configuration, and
- Driving the vehicle on a road while the vehicle is in the road driving configuration.

## Revendications

1. - Véhicule, comprenant
- un châssis de véhicule (4),
- deux premières roues de véhicule (6),
- deux deuxièmes roues de véhicule (8),
- un moteur d'entraînement (14) qui est conçu pour entraîner au moins deux des roues de véhicule, et
- une cabine de conducteur (16) dans laquelle sont disposés un siège de conducteur (18) et un moyen de direction (20) (volant),
dans lequel le véhicule définit un axe longitudinal de véhicule (X), un axe transversal de véhicule (Y) et un axe vertical de véhicule (Z), et dans lequel les premières roues de véhicule et les deuxièmes roues de véhicule définissent un empattement RD,
dans lequel
au moins le siège de conducteur est mobile d'au moins 180° autour de l'axe vertical de véhicule (Z), ou d'un axe parallèle à l'axe vertical de véhicule, dans lequel le véhicule définit une configuration de conduite dans un champ, dans laquelle une position assise définie par le siège de conducteur fait face aux premières roues de véhicule et définit une configuration de conduite sur route, dans laquelle la position assise définie par le siège de conducteur fait face aux deuxièmes roues de véhicule, dans lequel
le véhicule présente un logement d'outil (30) et le logement d'outil est disposé dans la direction longitudinale du véhicule entre les premières roues de véhicule (6) et les deuxièmes roues de véhicule (8), dans lequel la position assise définie par le siège de conducteur fait en outre face au logement d'outil dans la configuration de conduite dans un champ,
**caractérisé en ce que**
les quatre roues de véhicule sont directrices.

2. Véhicule selon la revendication 1, dans lequel
les premières roues de véhicule définissent une première largeur de voie et le véhicule présente un premier dispositif de réglage de largeur de voie (10) au moyen duquel la première largeur de voie est réglable ;
les deuxièmes roues de véhicule définissent une deuxième largeur de voie et le véhicule présente un deuxième dispositif de réglage de largeur de voie (12) au moyen duquel la deuxième largeur de voie est réglable.

3. Véhicule selon la revendication 1 ou 2, dans lequel le véhicule
définit un plan longitudinal de véhicule (XZ), qui est tendu par l'axe longitudinal de véhicule et l'axe vertical de véhicule, dans lequel le véhicule
présente un support d'outil de travail (32), lequel possède deux bras (34, 36), dans lequel
le support d'outil de travail est monté sur le logement d'outil (30), et les deux bras sont réglables entre une configuration de travail, dans laquelle les deux bras s'étendent transversalement à l'axe longitudinal de véhicule, et une configuration de transport, dans laquelle les deux bras s'étendent parallèlement au plan longitudinal de véhicule.

4. Véhicule selon la revendication 3, dans lequel
chacun des deux bras comprend une première partie de bras (42) et une deuxième partie de bras (44) qui sont reliées l'une à l'autre de manière articulée.

5. Véhicule selon la revendication 4, dans lequel
dans la configuration de transport, la première partie de bras (42) s'étend dans la direction longitudinale de véhicule entre les premières et les deuxièmes roues de véhicule et la deuxième partie de bras s'étend dans la direction longitudinale de véhicule sur le côté des premières roues de véhicule qui est opposé aux deuxièmes roues de véhicule.

6. Véhicule selon la revendication 4 ou 5, dans lequel, dans la configuration de transport, la première partie de bras (42) et la deuxième partie de bras (44) sont inclinées l'une par rapport à l'autre et forment un angle aigu.

7. Véhicule selon l'une quelconque des revendications 4 à 6, dans lequel
le support d'outil de travail présente des outils de travail (38) qui sont montés sur les bras.

8. Véhicule selon l'une quelconque des revendications 1 à 7, dans lequel le moteur d'entraînement est réalisé comme un entraînement sous plancher et est disposé sous le châssis de véhicule (4),

9. Utilisation d'un véhicule selon l'une quelconque des revendications précédentes, comprenant les étapes de :
- traitement d'un champ alors que le véhicule se trouve dans la configuration de conduite dans un champ, et
- conduite du véhicule sur une route alors que le véhicule se trouve dans la configuration de conduite sur route.
